# EUROPÄISCHE PATENTSCHRIFT

(11) **EP 0 751 062 B1**
(45) Veröffentlichungstag und Bekanntmachung des Hinweises auf die Patenterteilung: **11.09.2002**
(21) Anmeldenummer: 96104095.3
(22) Anmeldetag: 15.03.1996
(51) Int. Cl.: B62J 1/12, B62J 1/10

(54) **Motorrad mit einem höhenverstellbaren Sitz**
Motorbike with a height adjustable seat
Motocyclette avec siège réglable en hauteur

(30) Priorität: 27.06.1995 DE 19523308
(43) Veröffentlichungstag der Anmeldung: 02.01.1997
(73) Patentinhaber: Bayerische Motoren Werke Aktiengesellschaft, 80788 München (DE)
(72) Erfinder: Greger, Martin, 85757 Karlsfeld (DE)

(56) Entgegenhaltungen:
- DE-A- 3 047 069
- DE-A- 4 330 120

## Beschreibung

Die Erfindung bezieht sich auf ein Motorrad mit einem höhenverstellbaren Sitz.

Die DE 30 47 069 A1 zeigt ein Motorrad mit einem höhenverstellbaren Sitz. Ein Rahmenabschnitt des Motorradrahmens weist hier mehrere Aufnahmeeinrichtungen in unterschiedlichen Höhenlagen auf. In die Aufnahmeeinrichtungen lassen sich Zapfen eines höhenverstellbaren Motorradsitzes verankern. Die Aufnahmeeinrichtungen können durch Ausnehmungen, Gewindelöcher, Schlitze, Hülsen usw. gebildet sein. Inwieweit die in der Vorveröffentlichung beschriebene Konstruktion tatsächlich in der Praxis eingesetzt werden kann, lässt sich schwer abschätzen. Jedenfalls müssten die Zapfen des Sitzes in den Aufnahmeöffnungen gesichert sein, beispielsweise durch eine Schraubverbindung. Genaueres ist jedoch nicht ausgesagt.

Nach der DE 43 30 120 A1 lässt sich bei einem Motorrad ebenfalls der Fahrersitz in der Höhe verstellen. Hierfür sind am Fahrzeugaufbau Lagerböcke mit übereinander angeordneten Aufnahmeschlitzen vorgesehen, die die unterschiedlichen Höhenlagen des Motorradsitzes definieren. In die Schlitze lässt sich ein an der Unterseite der Sitzes befestigter Stahlbügel direkt oder durch an ihm befestigten Zwischenstücke einführen.

Aufgabe der Erfindung ist es, bei einem Motorrad den Sitz in einfacher Weise höhenverstellbar auszulegen und ihn dabei in jeder Position sicher zu verankern.

Die Aufgabe wird erfindungsgemäß mit den Merkmalen des Hauptanspruchs gelöst. Vorteilhafte Ausgestaltungen der Erfindung ergeben sich aus den Unteransprüchen.

Die Erfindung sieht also ein Verstellelement vor, das an einem aufbauseitigen Abschnitt in unterschiedlichen Höhenpositionen festlegbar ist. Wird der Motorradsitz aufgesetzt, kommt ein am Sitz befestigtes Verankerungsteil in Eingriff mit dem Verstellelement. Außerdem stützt sich der Motorradsitz an entsprechenden Stufen eines aufbaufesten Stufenbocks ab. Auf diese Weise ist eine sichere Lage und Festlegung des Motorradsitzes gegeben.

Für die Festlegung des Verstellelements ist am Fahrzeugaufbau wenigstens ein Lagerbock befestigt, der mehrere, leiterartig übereinander angeordnete Schlitze aufweist. In einer vorteilhaften Ausführung kann das Wechseln der einzelnen Positionen ohne ein Werkzeug von Hand durchgeführt werden Je nach gewünschter Position bzw. Höhenlage des Fahrzeugsitzes wird das Verstellelement in den zugeordneten Schlitz eingesetzt. Entsprechend der Anzahl der Schlitze sind Stufen am Stufenbock vorgesehen, das -heißt, zu jedem Schlitz ist eine in der Höhenlage entsprechend angepasste Stufe vorhanden.

Als besonders vorteilhaft hat es sich herausgestellt, zwei derartige Lagerböcke mit Schlitzen vorzusehen. Diese Lagerböcke sind in Querrichtung des Motorrads mit Abstand voneinander angeordnet. Das Verstellelement ist dabei als Querstange ausgebildet. Bei dieser Ausführung ist es weiter vorteilhaft, den Verankerungsteil des Motorradsitzes als hakenförmiges Bauteil auszuführen, das beim Aufbringen des Motorradsitzes in die Querstange eingehängt wird.

Die Erfindung lässt sich in besonders zweckmäßiger Weise bei einem Motorradsitz mit einem vorderen und einen hinteren Sitzteil anwenden, bei dem beide Sitzteile getrennt voneinander abgenommen werden können. In diesem Fall lässt sich der vordere Sitzteil erfindungsgemäß verstellen. Desweiteren ist er mit dem hinteren Sitzteil verankert. Auf diese Weise wird die Befestigung des Fahrzeugsitzes noch erhöht. Außerdem lässt diese Ausführung ein Abnehmen des vorderen Sitzteils nur zu, wenn zuerst der hintere Sitzteil abgenommen worden ist.

Schließlich ist es bei dieser Ausführung vorteilhaft, den hinteren Sitzteil abschließbar auszulegen, so dass nur der berechtigte Benutzer des Motorrads den Sitz abnehmen bzw. verstellen kann.

Weitere vorteilhafte Ausgestaltungen der Erfindung ergeben sich aus der Beschreibung eines Ausführungsbeispiels mit der dazugehörigen Zeichnung. Es zeigen:
- Figur 1: in Explosionsdarstellung den oberen Abschnitt eines Motorrads mit einem vorderen und einem hinteren Sitzteil und
- Figur 2: in vergrößertem Maßstab den Höhenverstellmechanismus des vorderen Sitzteils nach Figur 1.

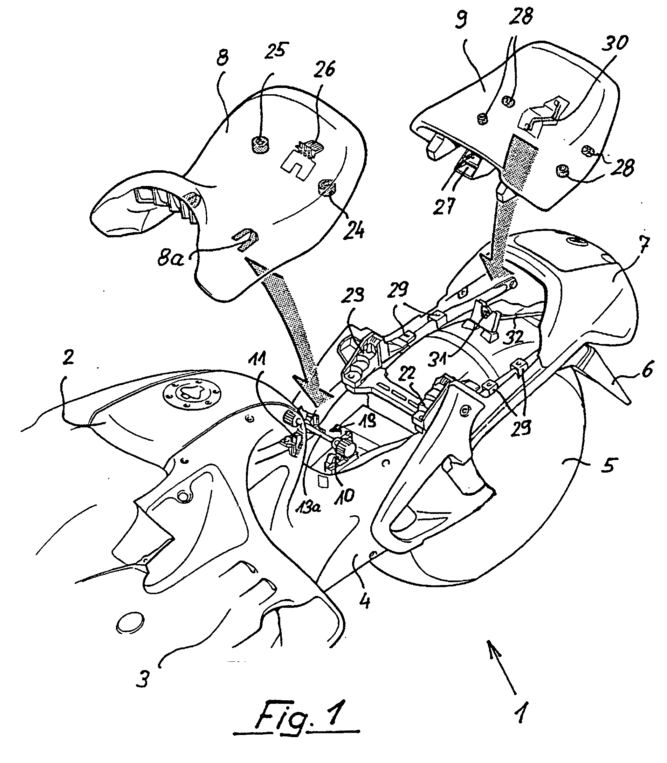

Figur 1 zeigt den mittleren und hinteren Abschnitt eines insgesamt mit 1 bezeichneten Motorrads. Es ist ein Tank 2 erkennbar, den teilweise eine vordere Verkleidung 3 umgibt. Die Verkleidung 3 setzt sich nach hinten in einen mittleren Verkleidungsabschnitt 4 fort. Außerdem ist ein Hinterrad 5 angedeutet, über das sich teilweise ein Schutzblech 6 erstreckt. Über dem Schutzblech 6 rundet ein hinterer Verkleidungsabschnitt 7 die Motorradverkleidung insgesamt ab.

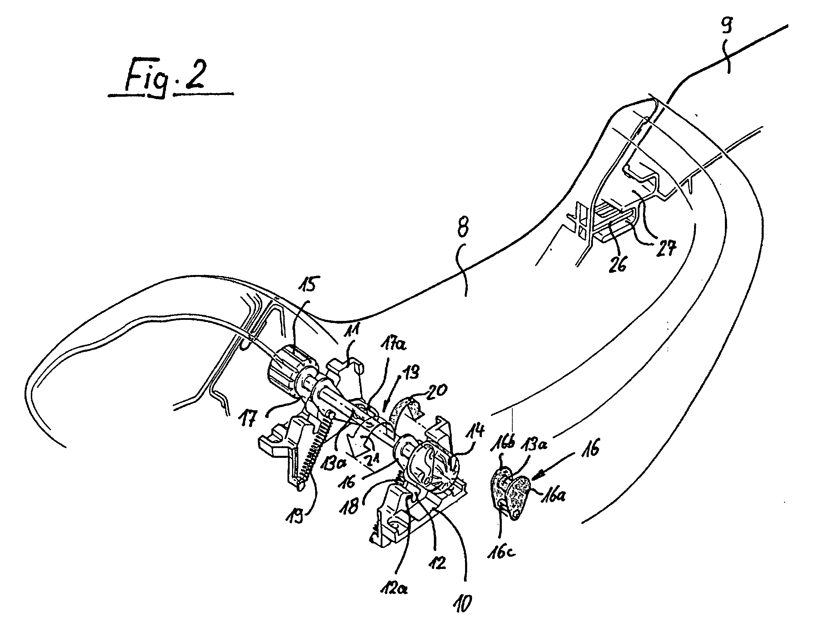

Den Raum zwischen dem Tank 2 und dem hinteren Verkleidungsabschnitt 7 füllt ein zweiteiliger Sitz aus. Dieser Sitz besteht nach Figur 1 aus einem höhenverstellbaren vorderen Sitzteil 8 und einem hinteren, in der Höhe nicht verstellbaren Sitzteil 9. Der vordere Sitzteil 8 ist an einem Abschnitt des Fahrzeugaufbaus in unterschiedlichen Positionen festlegbar. Hierfür sind an einem Rahmenabschnitt des Motorrades zwei Lagerböcke 10 und 11 befestigt; deutlicher erkennbar in Figur 2. Die Lagerböcke 10 und 11 sind in Fahrzeugquerrichtung in gleicher Höhe und mit Abstand voneinander angeordnet. Sie gleichen sich in ihrer Formgebung. Jeder Lagerbock 10, 11 besitzt danach Schlitze 12, die nach Art der Sprossen einer Leiter in unterschiedlichen Höhenlagen übereinander angeordnet sind. In Figur 2 sind lediglich der untere Schlitz deutlich und andeutungsweise der obere Schlitz des Lagerbockes 11 erkennbar, ebenso der untere Schlitz und der mittlere Schlitz des Lagerbockes 10. Stellvertretend für alle Schlitze ist lediglich der untere Schlitz des Lagerbockes 10 mit der Bezugsziffer 12 belegt. Die Schlitze 12 sind nach oben vorne offen und bildet in ihrem Verlauf eine Nase 12a aus.

Ein Verstellelement 13 besteht im wesentlichen aus einer Querstange 13a, an deren beiden Seiten knaufartige Endstücke 14 angeformt sind. Unmittelbar an die Endstücke 14, 15 schließen sich zur Mitte der Querstange 13a hin Verankerungsabschnitte 16, 17 an, mit denen das Verstellelement 13 in die zuvor erwähnten Schlitze 12 eingehängt wird. Der Verankerungsabschnitt 16 ist in Figur 2 im Bereich des Endstücks 14 noch einmal getrennt herausgezeichnet. Er wird aus zwei voneinander beabstandete tropfenförmige Plättchen 16a, 16b gebildet, die mit ihrem oberen breiteren Enden auf der Querstange 13a befestigt sind. An ihren unteren schmaleren Enden werden sie durch einen Stege 16c zusammengehalten, der auch zugleich in den jeweiligen Schlitz 12 eingreift.

Nicht in Einzelteildarstellung, jedoch im zusammengebauten Zustand nach Figur 2 erkennbar, greift an dem Verankerungsabschnitt 16 eine Rückzugfeder 18 an, die mit ihrem anderen Ende am Fahrzeugaufbau bzw. am Lagerbock 10 befestigt ist. Eine vergleichbare Feder 19 ist zwischen dem Lagerbock 11 und dem Verankerungsabschnitt 17 gespannt. Die Fedem 18 und 19 halten das Verstellelement 13 sicher in den Schlitzen 12. Die Nasen 12a der Schlitze 12 verhindern ein Herausrutschen der Stege 16c nach oben.

Das innere Plättchen 17a des Verankerungsabschnitts 17 ist an seiner schmalen Seite zu einer Langlochführung verlängert. In das Langloch greift ein am Lagerbock 11 abstehender Bolzen ein. Das Verstellelement 13 ist dadurch unverlierbar gehalten.

Nach Figur 2 befindet sich das Verstellelement 13 in den mittleren Schlitzen. Wie die Pfeile 20 und 21 andeuten, kann der Fahrer bei abgenommenem vorderen Sitzteil das Verstellelement 13 aus den Schlitzen der Lagerböcke 10 und 11 gegen die Kraft der Federn 18 und 19 herausziehen und je nach gewünschter Höhenlage des Sitzes in die oberen oder unteren Schlitze einlegen.

In Figur 1 trägt der vordere Sitzteil 8 an seiner Unterseite eine U-förmige nach vorne offene Klammer 8a. Diese Klammer 8a umgreift die Querstange 13a bei aufgesetztem Sitz. Desweiteren sind in der Figur 1 Stufenböcke 22, 23 am Fahrzeugaufbau befestigt, die gegenüber den Lagerböcken 10, 11 nach hinten versetzt sind. Die Stufen der Stufenböcke 22, 23 entsprechen in ihren Höhenlagen jeweils den zugeordneten Schlitzen der Lagerböcke 10 und 11. Klötzchen 24, 25, die an der Unterseite des vorderen Sitzteils 8 angebracht sind, liegen je nach gewünschter Einstellung auf den entsprechenden Stufen der Stufenböcke 22 , 23 auf. Dabei dient der durch den Stufensprung gebildete Absatz als Begrenzung für eine Bewegung des vorderen Sitzteils nach hinten.

Wird demnach das vordere Sitzteil aufgesetzt, so wird es erst in schräg nach unten zeigender Haltung mit der U-förmigen Klammer 8a über die Querstange 13a geschoben. Sodann wird er nach unten geschwenkt bis die Klötzchen 24, 25 auf den zugeordneten Stufen aufliegen. Die U-förmige Klammer 8a verhindert eine Bewegung des Sitzteils 8 nach vorne, während die Klötzchen 24, 25 zusammen mit Stufenabsätzen wie erwähnt eine Bewegung des Sitzteils nach hinten unterbinden. Der Sitz ist somit sicher in Längsrichtung gehalten. Für die seitliche Begrenzung sorgen nicht näher bezeichnete bzw. dargestellte Anschlagflächen am Sitzteil, die sich gegen rahmenfeste Abschnitte abstützen. Eine sichere Verankerung in Richtung der Hochachse ist ebenfalls durch die Klammer 8a zusammen mit der Querstange 13a sowie durch die noch zu beschreibende Verankerung mit dem hinteren Sitzteil 9 gegeben. Dabei verhindern die Nasen 12a der Schlitze 12, wie bereits erwähnt, ein Bewegen des Verstellelementes 13 nach oben.

Für die Verankerung mit dem hinteren Sitzteil 9 weist das vordere Sitzteil 8 an seiner Unterseite eine nach hinten abstehende Verankerungslasche 26 auf. Die Verankerungslasche 26 greift in ein wabenförmiges Bauteil mit übereinander angeordneten Aufnahmeöffnungen 27 ein, das an der unteren Seite des Sitzteils 9 angeordnet ist. Die Aufnahmeöffnungen 27 entsprechen in ihrer Anzahl den Verstellstufen des vorderen Sitzteils 8. Tatsächlich sind in der Zeichnung zwei dieser Aufnahmeöffnungen erkennbar.

Wie insbesondere Figur 2 zeigt, greift die Verankerungslasche 26 bei montiertem Fahrzeugsitz in eine der Position des vorderen Sitzteils entsprechenden Aufnahmeöffnung 27 ein. Der vordere Sitzteil 8 ist so durch den hinteren Sitzteil 9 verankert.

Schließlich sind in Figur 1 am hinteren Sitzteil 9 an der Unterseite weitere Auflageklötzchen 28 erkennbar, die sich bei montiertem hinteren Sitzteil 9 an entsprechenden Auflageflächen 29 am Rahmen des Motorrads abstützen.

Ebenfalls an der Unterseite des Sitzteils 9 ist ein Schlossbügel 30 befestigt, der bei aufgesetzten Sitzteil 9 in eine am Fahrzeugaufbau befestigte Schlossfalle 31 eingreift. Die Schlossfalle 31 kann über ein Gestänge 32 durch einen von außen zugänglichen, nicht näher dargestellten Schließzylinder betätigt werden.

Der Fahrzeugsitz wird in folgender Weise montiert. Zunächst wird, wie bereits beschrieben, das vordere Sitzteil 8 aufgesetzt, nachdem das Verstellelement 13 in die der gewünschten Höhenlage entsprechenden Schlitze eingesetzt wurde. Danach wird das Sitzteil 9 montiert, in dem die entsprechende Aufnahmeöffnung 27 in die Lasche 26 eingefädelt und der Sitzteil 9 nach unten gedrückt wird. Die Schlossfalle 31 schnappt über den Schlossriegel 30 und verriegelt den hinteren Sitzteil 9. Über die Lasche 26 und die Aufnahmeöffnung 27 ist der vordere Sitzteil 8 ebenfalls verriegelt. Ein Abnehmen des Sitzes ist nur über die Betätigung der Schließfalle 31 möglich, das heißt, über einen geeigneten Schlüssel.

## Patentansprüche

1. Motorrad mit einem höhenverstellbaren Sitz (8), der durch mindestens einen Lagerbock (10,11) und einen Stufenbock (22,23) in unterschiedliche Positionen einstellbar ist, wobei die stufen- und Lagerböcke (10, 11, 22, 23) in Längsrichtung des Motorrades mit Abstand zueinander angeordnet und an einem Abschnitt des Fahrzeugaufbaus befestigt sind, wobei der Lagerbock (10,11) leiterartig übereinander angeordnete Schlitze (12) aufweist, wobei in den der jeweils gewünschten Höhenlage zugeordneten Schlitz (12) des Lagerbocks (10, 11) ein Verstellelement (13) einsetz- und festlegbar ist, in das beim Anbringen des Motorradsitzes (8) ein an dem Sitz (8) angeordnetes Verankerungsteil (8a) eingreift, wobei der beabstandete Stufembock (22, 23) mit der Höhenlage der Schlitze (12) entsprechenden Stufen ausgeführt ist und wobei der Motorradsitz (8) mit einer Auflagefläche (24, 25) auf der jeweils passenden Stufe aufliegt.

2. Motorrad nach Anspruch 1, **dadurch gekennzeichnet, dass** in Fahrzeugquerrichtung gesehen, zwei im Abstand voneinander angeordnete Lagerböcke (10, 11) mit Aufnahmeschlitzen (12) in jeweils gleicher Höhenlage vorgesehen sind, in die ein als Querstange (13a) ausgebildetes Verstellelement (13) in der jeweils gewünschten Position einschiebbar und durch einen Rückzugfeder (18, 19) in dieser Lage gehalten ist.

3. Motorrad nach Anspruch 2, **dadurch gekennzeichnet, dass** an der Sitzunterseite ein hakenförmiges Verankerungsteil (8a) vorgesehen ist, das beim Anbringen des Sitzes (8) die Querstange (13a) des Verstellelementes (13) in ihrem Mittenbereich zwischen den Lagerböcken (10, 11) umgreift.

4. Motorrad nach einem der Ansprüche 1 bis 3, mit einem vorderen Sitzteil und einem hiervon getrennten hinteren Sitzteil, **dadurch gekennzeichnet, dass** der vordere Sitzteil (8) höhenverstellbar ist und an seinem dem hinteren Sitzteil (9) zugewandten Abschnitt eine Verankerung mit dem hinteren Sitzteil (9) aufweist.

5. Motorrad nach Anspruch 4, **dadurch gekennzeichnet, dass** die Verankerung durch eine abstehende Lasche (26) des vorderen Sitzteils (8) gebildet wird, die in übereinander angeordnete Aufnahmeöffnungen (27) des hinteren Sitzteils (9) einsteckbar ist, wobei die einzelnen Aufnahmeöffnungen (27) den Verstellpositionen des vorderen Sitzteiles (8) angepasst sind.

6. Motorrad nach Anspruch 5, **dadurch gekennzeichnet, dass** die durch die Lasche (26) und Aufnahmeöffnungen (27) gebildete Verankerung ein Abnehmen oder Verstellen des vorderen Sitzteils (8) nur bei abgenommenem hinteren Sitzteil (9) erlaubt, und dass das hintere Sitzteil (9) über ein Schloss verriegelbar ist.

## Claims

1. A motorcycle comprising a vertically adjustable seat (8) which can be adjusted in various positions by means of at least one bearing block (10, 11) and a stepped block (22, 23), wherein the stepped blocks (22, 23) and the bearing blocks (10, 11) are spaced apart in the longitudinal direction of the motorcycle and fastened to a portion of the vehicle body, wherein the bearing block (10, 11) has slots (12) superposed like a ladder, wherein an adjusting element (13) can be inserted and fixed in the slot (12) in the bearing block (10, 11) associated with each desired vertical position and when the motorcycle seat (8) is attached an anchoring part (8a) disposed on the seat (8) engages in the adjusting element, wherein the spaced-apart stepped block (22, 23) is formed with steps corresponding to the vertical position of the slots (12) and wherein the motorcycle seat (8) has a bearing surface (24, 25) resting on the appropriate step.

2. A motorcycle according to claim 1, **characterised in that** two spaced-apart bearing blocks (10, 11) with receiving slots (12) at corresponding vertical positions are provided in the transverse direction of the vehicle, and an adjusting element (13) in the form of a transverse rod (13a) is insertable into the slots in the desired position and is held therein by a restoring spring (18, 19).

3. A motorcycle according to claim 2, **characterised in that** a hooked anchoring part (8a) is provided on the underside of the seat and, when the seat (8) is attached, engages round the transverse rod (13a) of the adjusting element (13) in the central region thereof between the bearing blocks (10, 11).

4. A motorcycle according to any of claims 1 to 3 comprising a front seat part and a separate rear seat part, **characterised in that** the front seat part (8) is vertically adjustable and its portion facing the rear seat part (9) is anchored thereto.

5. A motorcycle according to claim 4, **characterised in that** the anchoring means is in the form of a lug (26) projecting from the front seat part (8) and insertable into superposed receiving openings (27) in the rear seat part, wherein the individual receiving openings (27) correspond to the positions for adjusting the front seat part (8).

6. A motorcycle according to claim 5, **characterised in that** the anchoring means formed by the lug (26) and the receiving openings (27) enables the front seat part (8) to be removed or adjusted only after the rear seat part (9) has been removed, and the rear seat part (9) can be secured by a lock.

## Revendications

1. Motocyclette équipée d'un siège (8) réglable en hauteur, qui peut être placé en différentes positions par l'intermédiaire d'au moins une chaise de palier (10, 11) et d'une chaise à étages (22, 23), étant précisé que, :
- les chaises de palier (10, 11) et à étages (22, 23) sont espacées respectivement l'une de l'autre en direction longitudinale et fixées à une partie de la structure du véhicule,
- chaque chaise de palier (10, 11) comporte des rainures (12) superposées en échelle,
- dans la rainure (12) associée à la position en hauteur souhaitée peut être introduit et fixé un élément de réglage (13) avec lequel vient en prise, quand on monte le siège (8), une pièce d'ancrage (8a),
- la chaise (22, 23) présente des étages correspondants aux positions en hauteur des rainures (12),
- le siège (8) de la motocyclette est appliqué chaque fois par des portées d'appui (24, 25) sur les étages correspondants.

2. Motocyclette selon la revendication 1,
**caractérisée en ce qu'**
il est prévu deux chaises de palier (10, 11) espacées entre elles en direction transversale et comportant des rainures d'accueil (12) situées aux mêmes hauteurs et dans lesquelles un élément de réglage (13) constitué par une tige transversale (13a) peut être introduit à la position souhaitée et y être maintenu par un ressort de rappel (18, 19).

3. Motocyclette selon la revendication 2,
**caractérisée en ce qu'**
il est prévu sur la face inférieure du siège une pièce d'ancrage (8a) en forme de crochet qui, quand on monte le siège (8) vient en prise autour de la tige transversale (13a) de l'élément de réglage (13), dans la zone médiane entre les chaises de palier (10, 11).

4. Motocyclette selon l'une quelconque des revendications 1 à 3, avec une partie avant de siège et une partie arrière séparée de la précédente,
**caractérisée en ce que**
la partie avant de siège (8) est réglable en hauteur et présente dans sa section située vers la partie arrière de siège (9), un ancrage le reliant à celle-ci.

5. Motocyclette selon la revendication 4,
**caractérisée en ce que**
l'ancrage est constitué par une patte (26) dépassant la partie avant de siège (8) et qui peut être engagée dans des ouvertures d'accueil (27) superposées que présentent la partie arrière de siège (9), ces différentes ouvertures (27) étant adaptées aux positions de réglage de la partie avant de siège (8).

6. Motocyclette selon la revendication 5,
**caractérisée en ce que**
l'ancrage constitué par la patte (26) et les ouvertures d'accueil (27) autorise l'enlèvement ou le déplacement de la partie avant de siège (8) seulement quand la partie arrière de siège (9) a été retirée, cette partie (9) étant verrouillable par une serrure.
